## Europäisches Patentamt
## European Patent Office
## Office européen des brevets

(11) Veröffentlichungsnummer : **0 117 998**
**B1**

(12)    **EUROPÄISCHE PATENTSCHRIFT**

(45) Veröffentlichungstag der Patentschrift :
23.03.88

(21) Anmeldenummer : 84100684.4

(22) Anmeldetag : 24.01.84

(51) Int. Cl.⁴ : **C 08 L 77/00,** C 08 K   9/04,
C 08 K   9/06, C 08 J   5/08,
C 08 K   3/34

(54) Thermoplastische Formmassen mit erhöhter Zähigkeit.

(30) Priorität : 02.02.83 DE 3303376

(43) Veröffentlichungstag der Anmeldung :
12.09.84 Patentblatt 84/37

(45) Bekanntmachung des Hinweises auf die Patenterteilung : 23.03.88 Patentblatt 88/12

(84) Benannte Vertragsstaaten :
BE DE FR GB IT NL

(56) Entgegenhaltungen :
EP-A- 0 045 949
CH-A-   448 509
CH-A-   615 653
FR-A- 1 505 256
US-A- 4 405 727
Patent Abstracts of Japan, Band 3, Nr.46, 18. April
1979, Seite 120C43 & JP-A-54-22457
Patent Abstracts of Japan, Band 6, Nr.54, 9. April 1982
& JP-A-56-167740

(73) Patentinhaber : BASF Aktiengesellschaft
Carl-Bosch-Strasse 38
D-6700 Ludwigshafen (DE)

(72) Erfinder : Steinberger, Rolf, Dr.
Am Moenchhof 47
D-6707 Schifferstadt (DE)
Erfinder : Theysohn, Rainer, Dr.
Am Bruch 38
D-6710 Frankenthal (DE)

**0 117 998**

### Beschreibung

Die vorliegende Erfindung betrifft Formmassen auf Basis thermoplastischer Polyamide und feinteiliger, silikatischer Füllstoffe und gegebenenfalls Glasfasern, die aufgrund einer besonderen Beschichtung des Füllstoffes erhöhte Zähigkeit aufweisen.

Es ist bekannt, Polyamide mit silikatischen Füllstoffen auszurüsten, um die Steifigkeit, die Wärmeformbeständigkeit oder auch die Oberflächenhärte der Formmassen zu verbessern. Füllstoffe haben im Gegensatz zu den ebenfalls verstärkend wirkenden Glasfasern den Vorteil, daß die Formassen ein isotropes Schwindungs- und Verzugsverhalten aufweisen. Nachteilig bei Füllstofe enthaltenden Polyamidformmassen ist oftmals ihre geringe Zähigkeit, dadurch Kerbwirkung der Füllstoffteilchen die Festigkeitseigenschaften des Polyamids erheblich beeinträchtigt werden können.

Nach der DE-OS 19 65 434 kann man die mechanischen Eigenschaften, vor allem die Zähigkeit von gefüllten Polyamiden dadurch verbessern, daß man den Verstärkerfüllstoff mit Organosilanverbindungen beschichtet und damit eine bessere Haftung erzielt.

Es ist bekannt, Polyamide mit Mischungen aus Glasfasern und silikatischen Füllstoffen auszurüsten, da hierdurch Festigkeit und Steifigkeit dieser Formmassen kontinuierlich variert werden können zwischen den Werten reiner glasfaserverstärkter und denen reiner Mineral-gefüllter Formmassen und damit auf einfache Art Werkstoffe nach Maß hergestellt werden können.

Außerdem kann durch die Beimischung silikatischer Füllstoffe das stark anisotrope Schwindungs- und Verzugsverhalten glasfaserverstärkter PA-Formmassen je nach Mineralanteil gemindert werden. Nachteilig an diesen Mischungen war aber bisher, daß schon bei geringen Zusätzen der 2. Verstärkerkomponent, sei es silikatischer Füllstoff zu Glasfasern oder sei es Glasfasern zum silikatischen Füllstoff, ein starker Abfall des Zähigkeitsniveaus in Kauf genommen werden mußte und damit der Vorteil einer beliebigen Variation von Festigkeit, Steifigkeit und Schwindungsverhalten stark beeinträchtigt wurde.

Es war weiterhin nach DE-PS 24 26 657 bekannt, Polyurethan-Anionomere in Form wäßriger Dispersionen zum Beschichten von Glasfasern zu verwenden, die ihrerseits zur Verstärkung von thermoplastichen Polyamiden eingesetzt werden.

Aufgabe der vorliegenden Erfindung war es, durch eine besondere Oberflächenbeschichtung der feinteiligen, silikatischen Füllstoffe eine Kombination des Verstärkungseffektes dieser Füllstoffe in Polyamiden mit einem Zähigkeitsniveau zu erreichen, wie es bisher noch nicht möglich war.

Aufgabe der vorliegenden Erfindung war es ferner, den Abfall der Zähigkeit solcher Formmassen aus thermoplastischen Polyamiden und Mischungen aus Glasfasern und silikatischen Füllstoffen zu vermeiden oder doch weitgehend abzufangen.

Überraschenderweise wurde als Lösung dieser Aufgaben gefunden, daß Polyurethan-Ionomere, die sich bereits als Haftvermittler bei Glasfasern bewährt haben, die Einbindung der silikatischen Füllstoffe in die Polyamidmatrix begüngstigen, obwohl die chemische Zusammensetzung als auch die Oberflächenstruktur dieser silikatischen Füllstoffe von der von Glasfasern total verschieden ist.

Gegenstand der Erfindung sind daher thermoplastische Formmassen mit erhöhter Zähigkeit, enthaltend

(A) 30 bis 90 Gew.-% eines thermoplastischen Polyamids,

(B) 3 bis 70 Gew.-% eines feinteiligen, mit 0,1 bis 3,0 Gew.-% eines Organosilans und mit einem polymeren Beschichtungsmittel behandelten silikatischen Füllstoffs,

(C) 0 bis 50 Gew.-% Glasfasern und

(D) gegebenenfalls übliche Zusatzstoffe in wirksamen Mengen, wobei die Summe der Komponenten (A) bis (D) 100 Gew.-% beträgt, die dadurch gekennzeichnet sind, daß das polymere Beschichtungsmittel ein Polyurethan-Ionomeres in einer Menge von 0,5 bis 10,0 Gew.-% ist.

Die verwendeten thermoplastischen Polyamide sind bevorzugt gesättigte, lineare Polyamide mit einem K-Wert (gemessen nach Fikentscher, Cellulosechemie 13 (1932), Seite 58, in 1 %iger Lösung in konzentrierter Schwefelsäure) von 60 bis 80. Geeignet sind z. B. Polycaprolactam (Polyamid-6), Polyhexamethylenadipinsäureamid (Polyamid-6,6), Polyhexamethylensebazinsäureamid, Polylaurinlactam, Polyundecanamid ; ferner Homo- und Copolyamide, die unter Verwendung von Adipinsäure, Azelainsäure, Sebazinsäure, Dodecandisäure, Terephthalsäure einerseits und Hexamethylendiamin, Trimethylhexamethylendiamin, Bis-(4-aminocyclohexyl)-methan, 2,2-Bis-(4'-aminocyclohexyl)-propan andererseits hergestellt werden ; sowie Copolyamide, die durch Polykondensation von Lactamen zusammen mit den oben genannten Dicarbonsäuren und Diaminen erhalten werden.

Als Glasfasern kommen alle üblichen Glasfasern in Betracht, die für die allgemeinen übliche Verstärkung von Polyamid-Formmassen angeboten und verwendet werden. Die in der Formmasse vorliegenden Glasfasern haben im allgemeinen eine Länge von 50 bis 1000, vorzugsweise 100 bis 500 und einen Durchmesser von etwa 5 bis 20 μm, vorzugsweise 6 bis 14 μm. Sofern Glasfasern mitverwendet werden, beträgt ihr Gehalt bis zu 50 Gew.-%, vorzugsweise etwa 5 bis 40 Gew.-%, bezogen auf die Formmasse. Geeignete feinverteilte silikatische Füllstoffe (B) haben im allgemeinen einen Teilchendurchmesser von 0,01 μm bis 30 μm, vorzugsweise 0,05 μm bis 20 μm. Man verwendet die Füllstoffe in einer Menge von 3 bis 70 Gew.-%, vorteilhaft 5 bis 50 Gew.-%, bezogen auf die Formmasse. Bei Mitverwendung von Glasfasern liegt der Füllstoffgehalt im allgemeinen bei 3 bis 30 Gew.-%. Sofern keine Glasfasern

2

mitverwendet werden, benutzt man vorteilhaft 15 bis 50 Gew.-% Füllstoffe. Geeignete silikatische Füllstoffe sind beispielsweise Kaolin, calc. Kaolin, Quarz, amorphes $SiO_2$, Zirkonsilikat, Wollastonit, Glimmer und Talkum.

Vorzugsweise wird verwendet calcinierter Kaolin mit einem $Al_2O_3$-Gehalt von 44 bis 45 Gew.-% und einem $SiO_2$-Gehalt von 52 bis 54 Gew.-% bevorzugt, der durch thermische Behandlung der natürlich vorkommenden Aluminiumsilikate Kaolin oder Kaolinit bei Temperaturen zwischen 800 und 1 300 °C erhalten wird. Seine Mohs-Härte soll vorzugsweise kleiner als 5 sein. Die Partikelgröße soll bevorzugt zwischen 0,01 μm und 10 μm, vorzugsweise zwischen 0,05 μm und 3 μm liegen, die spezifische Oberfläche ist größer als 6 $m^2/g$, vorzugsweise größer als 10 $m^2/g$.

Gut geeignet ist auch Calciumsilikat mit der ungefähren Bruttozusammensetzung $CaSiO_3$. Seine Korngröße liegt bevorzugt zwischen 0,01 und 30 μm, insbesondere zwischen 0,5 und 20 μm ; im Falle der nadelförmigen Modifikation liegt der Durchmesser zwischen 0,01 und 15 μm und die Länge zwischen 2 und 90 μm.

Ebenfalls bevorzugt sind Glimmertypen mit Korngrößen zwischen 1 und 30 μm.

Der feinverteilte silikatische Füllstoff wird vorzugsweise zunächst mit einem Organosilan in einer Menge von 0,1 bis 3 Gew.-%, insbesondere 0,5 bis 2 Gew.-%, und anschließend mit einem Polyurethan-Ionomeren in einer Menge von 0,5 bis 10 Gew.-%, insbesondere 1,0 bis 5 Gew.-% beschichtet.

Geeignet sind die üblichen, für die Beschichtung von Glasfasern oder Füllstoffen bekannten Organosilane, wie Aminoalkylsilane.

Besonders gut geeignet sind Aminoalkyltrialkoxysilane, wie γ-Aminopropyltriethoxysilan.

Die als Beschichtungsmittel (F) verwendeten Polyurethan-Ionomeren sind Polyurethane, welche in ihren Molekülen in größeren Abständen ionische Zentren enthalten. Sie sind Heteropolymere mit ausgeprägter Segmentstruktur (vgl. D. Dieterich et al, « Angewandte Chemie », 82. Jg., 1970, Nr. 2, Seiten 53 bis 63).

Die Polyurethan-Ionomeren sind bekanntlich hochmolekulare Segmentpolymere, die zu makromolekularen Gebilden assoziieren, wodurch Teilchengewichte von über 500 000 entstehen. Durch interchenare Wechselwirkungen (Coulomb-Kräfte und Wasserstoffbrücken) haben sie ähnliche Eigenschaften wie vernetzte Elastomere. In polaren organischen Lösungsmitteln vorliegende Polyurethan-Ionomere bilden bei Wasserzusatz spontan stabile wäßige Dispersionen mit dem Ionomeren als disperse Phase, so daß das sonst übliche Emulgieren entfällt. Nach Entfernung des organischen Lösungsmittels liegen die Polyurethan-Ionomeren als emulgator- und lösungsmittelfreie Dispersionen vor, die in der Regel weder Emulgatoren noch organische Lösungsmittel enthalten.

Die Polyurethane-Ionomere sind üblicherweise aufgebaut aus Polyestern aus aliphatischen Dicarbonsäuren und Diolen mit Molekulargewichten von 1000 bis 5 000 als Polyolkomponente und aliphatischen, araliphatischen oder aromatischen Diisocyanen als Polyisocyanat-Komponente sowie Salzen von Diaminocarbonsäuren zur Erzeugnung der ionischen Zentren im Polyurethan.

Außerordentlich wasserfeste Polyurethan-Ionomeren sind solche, die durch Polyisocyanate oder andere reaktive Komponenten wie Formaldehyd oder seine Derivate zusätzlich chemisch vernetzt sind. Derartige Polymere sind daher zur Verwendung für die erfindungsgemäßen Glasfasern besonders geeignet.

Die Polyurethan-Ionomere können nach den verschiedenen, dem Fachmann bekannten Verfahren hergestellt werden, z. B. nach dem Emulgator-Scherkraft-Verfahren, dem Aceton-Verfahren oder dem Schmelzdispergierverfahren (vgl. hierzu D. Dieterich und H. Reiff, Angew. makromol. Chemie 26, 85, 101 (1972)).

Bevorzugt werden Dispersionen von Polyurethan-Ionomeren, wie sie z. B. in « Angewandte Chemie » 82, 53 (1970) näher beschrieben werden. Ferner sind die nach dem Schmelzdispergierverfahren (z. B. nach DT-OS 1 770 068 und DT-OS 1 193 271) erhaltenen Ionomerdispersionen besonders geeignet.

Die besten Eigenschaften werden mit solchen Dispersionen erhalten, deren dispergierte Teilchen einen mittleren Durchmesser von weniger als 1 μm und insbesondere von 0,05 bis 0,5 μm aufweisen. Weiterhin werden Dispersionen solcher Polyurethan-Ionomerer bevorzugt, die einen Ionengruppengehalt von 5 bis 30 Milliäquivalenten pro 100 g Trockensubstanz aufweisen.

Zur Erzielung optimaler Eigenschaften ist es weiterhin erforderlich, daß die dispergierten Polyurethan-Ionomeren selbst zu hochmolekularen Kunststoffen mit gutem Eigenschaftsbild auftrocknen. Bevorzugt sind solche Polyurethane, welche, wenn man ihre Dispersion auf eine flache Unterlage ausgießt und trocknet, einen Film liefern, der folgende Werte aufweist :

Zugfestigkeit : höher als 50 $kp/cm^2$, vorzugsweise
höher als 100 $kp/cm^2$
Bruchdehnung : 100-600 %
Shore-A-Härte : 50-90
Wasserquellung bei 20 °C : kleiner als 30 %.

Das Polyurethan-Ionomere wird in der Regel in Form einer wäßrigen Dispersion aufgebracht, die 10 bis 60, vorzugsweise 20 bis 50 Gew.-% Feststoff enthält. Konzentrationen unter 10 Gew.-% geben nur einen ungenügenden Schutzfilm, höhere Konzentrationen als 60 Gew.-% ergeben zu dicke Überzugsschichten, die zu einer Schwächung des aus derartig beschichteten Füllstoffen hergestellten Füllstoff-Kunststoff-Verbundwerkstoffs führen. Außerdem verbietet es sich aus Kostengründen, noch größere Mengen auf den Füllstoff aufzubringen.

Der mit der wäßrigen Dispersion des Polyurethan-Ionomeren beschichtete Füllstoff wird anschließend getrocknet, zweckmäßig bei 100° bis 180 °C und gegebenenfalls noch 10 bis 60 Minuten lang thermisch nachbehandelt.

Die Herstellung der erfindungsgemäßen Formmassen erfolgt auf den einschlägig bekannten Maschinen zur Herstellung gefüllter Thermoplaste, wie z. B. Einwellen- oder Zweiwellen-Extrudern oder Schneckenknetern. In der Regel geht man hierbei von Polyamidgranulat aus, das bei Temperaturen zwischen 250° und 310 °C aufgeschmolzen wird. Der beschichtete, silikatische Füllstoff wird zweckmäßigerweise an der gleichen Stelle zudosiert wie das Polyamidgranulat, eine Zugabe in bereits aufgeschmolzenes Polymeres ist jedoch auch möglich. Die Glasfasern werden in Form von Schnittglas oder Rovings in bekannter Weise der Schnecke zugesetzt. Die Zugabe von Glasfasern und silikatischem Füllstoff kann an der gleichen oder auch an verschiedenen Stellen des Extruders erfolgen. Bevorzugt ist jedoch die Zugabe der beiden Verstärkerkomponenten an verschiedenen Stellen des Extruders.

Die erfindungsgemäßen Formmassen können noch übliche Zusatzstoffe und Hilfsmittel, wie z. B. UV-, Hitze- oder Hydrolysestabilisatoren auf Phenol-, Amino- oder Kupferbasis enthalten, ferner Schmier-, Gleit- und Trennmittel, Farbpigmente und Flammschutzmittel. Das Polyamid kann im Sinne einer weiteren Zähigkeitsverbesserung polymermodifiziert sein, z. B. mit Copolymeren des Äthylens, die gegebenenfalls Carboxylgruppen enthalten können.

Die homogene schmelzgemischte Formmasse wird zu Strängen extrudiert, gekühlt und granuliert. Die Granulate können dann einer weiteren Verarbeitung im Spritzguß oder Extrusion zugeführt werden.

Die in den Beispielen genannten Prozente beziehen sich auch das Gewicht.

### Beispiele

A. Herstellung des beschichteten Füllstoffs

### Beispiel 1

In einer Mischapparatur (Schnellmischer, Typ FM 75 D der Fa. Henschel) wurde handelsübliches kalziniertes Kaolin (44,5 % $Al_2O_3$, 52,3 % $SiO_2$, spez. Oberfläche 18-20 $m^2$/g) mit 1 % γ-Aminopropyltriethoxysilan behandelt und anschließend mit 6,67 % einer wäßrigen Polyurethan-Anionomer-Dispersion (45 % Feststoff, basierend auf einem Polyester aus Adipinsäure, 1,6-Hexandiol und Neopentylglykol mit MG = 2300, sowie 1,4-Butandiol und Isophorondiisocyanat und dem Na-Salz von N-2-Carboxyäthyl-Äthylendiamin) besprüht und danach einer thermischen Nachbehandlung bei 140 °C und 30 Min. Verweilzeit unterzogen. Das so beschichtete Mineral weist eine Konzentration von 3 % an Polyurethan-Ionomer auf.

### Beispiel 2

Es wurde wie nach Beispiel 1 gearbeitet, wobei jedoch ein Ca-metasilikat (Wollastonit) mit nadelförmigen Habitus (Durchmesser ~ 10 µm, Länge ~ 50 µm) verwendet wurde.

### Beispiel 3

Es wurde wie nach Beispiel 2 gearbeitet, die Menge an Polyurethan-Ionomer jedoch so gewählt, daß 1 %, bezogen auf Wollastonit resultierte.

### Beispiel 4

Es wurde wie nach Beispiel 2 gearbeitet, die Menge an Polyurethan-Ionomer jedoch so gewählt, daß 6 %, bezogen auf Wollastonit resultierte.

### Beispiel 5

Es wurde wie nach Beispiel 2 gearbeitet, jedoch der Wollastonit ohne vorherige Silanbehandlung mit 3 % Polyurethan-Ionomer beschichtet.

B. Herstellung der thermoplastischen Formmassen ohne Glasfaserverstärkung

### Beispiele 7-14

Auf einem Zweischneckenextruder (Typ ZSK der Fa. Werner und Pfeiderer) wurden Polyamid 6 vom K-Wert 72 und beschichteter Füllstoff zudosiert, das Polyamid bei Temperaturen zwischen 250-300 °C aufgeschmolzen und mit dem Füllstoff homogen gemischt, in Strängen ausgetragen, gekühlt, granuliert und getrocknet. Die Mengen wurden so gewählt, daß die Mischung 30 % des Füllstoffes enthielt. Neben den in den Beispielen 1 bis 5 genannten Füllstoffen wurde zu Vergleichszwecken auch ohne jegliche Beschichtung und ein Wollastonit mit 1 % γ-Aminopropyltriethoxysilan eingearbeitet.

Aus dem Granulat wurden Prüfkörper bei Temperaturen von 280 °C spritzgegossen, an denen die Schlagzähigkeit $a_n$ nach DIN 53454, die Lochkerbschlagzähigkeit $a_{KL}$ nach DIN 53753 und die Bruchzähigkeit $W_{50}$ nach DIN 53443, Blatt 1, an Rundscheiben $2 \times 60$ mm bestimmt wurden. Die Ergebnisse sind in der Tabelle I aufgeführt.

(Siehe Tabelle I Seite 6 f.)

Tabelle I

Polyamid-6 + 30 % Füllstoff

| Beispiel Nr. | Füllstoff | Beschichtung | Schlagzähigkeit $a_n$ [kJ/m$^2$] | Lochkerbschlagzähigkeit $a_{KL}$ [kJ/m$^2$] | Bruchzähigkeit $W_{50}$ [N,m] |
|---|---|---|---|---|---|
| 7 | Wollastonit | – | 40 | 18 | 1,9 |
| 8 | " | 1 % Organosilan | 120 | 27 | 18 |
| 9 | " | wie Bsp. 3 | 130 | 29 | 20 |
| 10 | " | wie Bsp. 2 | ohne Bruch | 35 | 27 |
| 11 | " | wie Bsp. 4 | ohne Bruch | 38 | 28 |
| 12 | " | 3 % Polyurethanionomer | 125 | 26 | 20 |
| 13 | Kalz. Kaolin | 1 % Organosilan | 125 | 28 | 20 |
| 14 | " | wie Bsp. 1 | ohne Bruch | 26 | 29 |

**0 117 998**

C. Herstellung der thermoplastischen Formmassen mit Glasfaserverstärkung

Beispiele 15-25

Auf einem Schneckenextruder (Typ ZSK der Fa. Werner und Pfleiderer) wurden Polyamid vom K-Wert 72 und beschichteter Füllstoff gemäß Beispiel 2 zudosiert, das Polyamid bei Temperaturen zwischen 250-300 °C aufgeschmolzen, mit dem Füllstoff homogen gemischt und direkt zu dieser Schmelzmischung Glasfasern in Form von Rovings zugesetzt. Diese Mischung wurde in Strängen ausgetragen, gekühlt, granuliert und getrocknet. Die Mengen wurden so gewählt, daß die Summe aus Füllstoff und Glasfasern 30 Gew.-% der Formmasse betrug. Aus den Granulaten wurden Prüfkörper bei Temperaturen von 280 °C spritzgegossen, an denen die Schlagzähigkeit $a_n$ nach DIN 53453, die Lochkerbschlagzähigkeit $a_{KL}$ nach DIN 53753, die Bruchzähigkeit $W_{50}$ nach DIN 53443, Blatt 1, an Rundscheiben 2 × 60 mm sowie die Zugfestigkeit $\sigma_R$ nach DIN 53455 und der Elastizitätsmodul $E_Z$ nach DIN 53457 bestimmt wurden. Die Zusammensetzung der einzelnen Mischungen sowie die zugehörigen Eigenschaftswerte sind in der Tabelle II aufgeführt.

(Siehe Tabelle II Seite 8 f.)

7

Tableau II

| Bsp. | Glas-<br>faser-<br>anteil | Woll-<br>astonit-<br>anteil | Beschichtung<br>des<br>Wollastonits<br>mit | | Schlag-<br>zähig-<br>keit<br>$a_n$<br>$[kJ/m^2]$ | Loch-<br>kerb-<br>schlag-<br>zähig-<br>keit<br>$a_{KL}$<br>$[kJ/m^2]$ | Bruch-<br>zähig-<br>keit<br>$W_{50}$<br>$[N.m]$ | Zug-<br>festig-<br>keit<br>$R$<br>$[N/mm^2]$ | Elastizitäts-<br>modul<br>$E_z$<br>$[N/mm^2]$ |
|---|---|---|---|---|---|---|---|---|---|
| | | | Silan<br>[%] | PU-Ionomer<br>[%] | | | | | |
| 15 | 30 | – | – | – | 58 | 26 | 6.5 | 178 | 8500 |
| 16 | 25 | 5 | 1 | – | 37 | 12 | 2.0 | 155 | 7300 |
| 17 | 25 | 5 | 1 | 3 | 38 | 14 | 3.0 | 148 | 7500 |
| 18 | 20 | 10 | 1 | – | 36 | 12.5 | 1.8 | 130 | 6300 |
| 19 | 20 | 10 | 1 | 3 | 40 | 15 | 4.0 | 135 | 6200 |
| 20 | 10 | 20 | 1 | – | 35 | 14 | 2.0 | 110 | 5600 |
| 21 | 10 | 20 | 1 | 3 | 50 | 20 | 10 | 105 | 5500 |
| 22 | 5 | 25 | 1 | – | 37 | 16 | 3.0 | 95 | 5000 |
| 23 | 5 | 25 | 1 | 3 | 75 | 24 | 15 | 90 | 5100 |
| 24 | – | 30 | 1 | – | 120 | 27 | 18 | 85 | 4600 |
| 25 | – | 30 | 1 | 3 | ohne Bruch | 35 | 27 | 85 | 4500 |

**Patentansprüche**

1. Thermoplastische Formmassen, enthaltend
   (A) 30-90 Gew.-% eines thermoplastischen Polyamids,
   (B) 3-70 Gew.-% eines feinteiligen, mit 0,1-3 Gew.-% eines Organosilans und mit einem polymeren Beschichtungsmittel behandelten silikatischen Füllstoffs
   (C) 0-50 Gew.-% Glasfasern und,
   (D) gegebenenfalls übliche Zusatzstoffe in wirksamen Mengen,
wobei die Summe der Komponenten (A)-(D) 100 Gew.-% beträgt, dadurch gekennzeichnet, daß das polymere Beschichtungsmittel ein Polyurethan-Ionomeres in einer Menge von 0,5-10 Gew.-% ist.

2. Thermoplastische Formmassen nach Anspruch 1, dadurch gekennzeichnet, daß das Organosilan ein Aminoalkyl-trialkoxysilan ist.

3. Thermoplastische Formmassen nach den Ansprüchen 1 und 2, dadurch gekennzeichnet, daß der Füllstoff (B) zunächst mit dem Organosilan und anschließend mit dem Polyurethan-Ionomeren beschichtet worden ist.

4. Thermoplastische Formmassen nach den Ansprüchen 1 bis 3, dadurch gekennzeichnet, daß der Füllstoff (B) ein wasserfreies Aluminium-Silikat, das durch thermische Dehydratisierung von Kaolin oder Kaolinit erhältlich ist, ein Calciumsilikat mit nadelförmigen Habitus oder ein Glimmer ist.


**Claims**

1. A thermoplastic molding composition containing
   (A) 30-90 % by weight a of thermoplastic polyamide,
   (B) 3-70 % by weight of a finely divided silicatic filler treated with 0.1-3 % by weight of an organosilane and with a polymeric coating agent,
   (C) 0-50 % by weight of glass fibers and
   (D) facultatively customary additives in effective amounts,
the sum of components (A)-(D) being 100 % by weight, wherein the polymeric coating agent is a polyurethane ionomer in an amount of 0.5-10 % by weight.

2. A thermoplastic molding composition as claimed in claim 1, wherein the organosilane is an aminoalkyltrialkoxysilane.

3. A thermoplastic molding composition as claimed in claim 1 or 2, wherein the filler (B) has first been coated with the organosilane and then with the polyurethane ionomer.

4. A thermoplastic molding composition as claimed in any of claims 1 to 3, wherein the filler (B) is an anhydrous aluminum silicate obtainable by thermal dehydration of kaolin or kaolinite, a calcium silicate having an acicular habit, or a mica.


**Revendications**

1. Matières à mouler thermoplastiques, contenant
   (A) 30 à 90 % en poids d'un polyamide thermoplastique,
   (B) 3 à 70 % en poids d'une matière de charge silicatée en fines particules, traitée avec 0,1 à 3 % en poids d'un organo-silane et avec une substance d'enduction polymère,
   (C) 0 à 50 % en poids de fibres de verre et
   (D) éventuellement des additifs usuels en des proportions efficaces,
la somme des composants (A) à (D) étant égale à 100 % en poids, caractérisées en ce que la substance d'enduction polymère est un ionomère de polyuréthanne, utilisé à raison de 0,5 à 10 % en poids.

2. Matières à mouler thermoplastiques suivant la revendication 1, caractérisées en ce que l'organo-silane est un aminoalkyl-trialcoxy-silane.

3. Matières à mouler thermoplastiques suivant les revendications 1 et 2, caractérisées en ce que la matière de charge (B) est d'abord traitée avec l'organo-silane, puis avec l'ionomère de polyuréthanne.

4. Matières à mouler thermoplastiques suivant les revendications 1 à 3, caractérisées en ce que la matière de charge (B) est un silicate d'aluminium anhydre, préparé par une déshydratation thermique de kaolin ou de kaolinite, un silicate de calcium de structure aciculaire ou un mica.